# DEMANDE DE BREVET EUROPEEN

(11) **EP 1 279 591 A1**
(43) Date de publication de la demande: **29.01.2003**
(21) Numéro de dépôt: 02291589.6
(22) Date de dépôt: 26.06.2002
(51) Int. Cl.: B64C 25/10, B64C 25/20, B64C 25/58

(54) **Train d'atterrissage relevable pour avion gros porteur, du type à relevage vertical**

(30) Priorité: 24.07.2001 FR 0109843
(71) Demandeur: MESSIER-DOWTY S.A., F-78140 Velizy Villacoublay (FR)
(72) Inventeur: Derrien, Michel, 78000 Versailles (FR); Ducos, Dominique, 91600 Savigny sur Orge (FR); Locufier, Jean-François, 78120 Rambouillet (FR)
(74) Mandataire: Jaunez, Xavier

(57) **Abrégé**

L'invention concerne un train d'atterrissage relevable pour avion gros porteur, du type à relevage vertical, comportant une pluralité de jambes agencées les unes derrière les autres pour former, en position train bas, une rangée parallèle au plan longitudinal médian de l'avion, et en extrémité de chacune desquelles est montée une paire de roues.

Conformément à l'invention chaque jambe (101) comporte un caisson tubulaire (102) rigidement solidaire d'une structure d'avion, un balancier (103) articulé sur l'extrémité inférieure de ce caisson tubulaire, et un amortisseur (106) reliant de façon articulée un appendice (105) du balancier (103) à un organe (110) monté pour coulisser axialement à l'intérieur du caisson tubulaire (102), l'organe coulissant (110) étant relié à un vérin de manoeuvre (125) par une tringlerie associée (120,123) montée en partie haute dudit caisson tubulaire de façon que ledit organe soit déplaçable axialement par l'actionnement du vérin de manoeuvre (125) entre deux positions extrêmes dont l'une correspond à la position train bas et l'autre à la position train haut.

## Description

La présente invention concerne les trains d'atterrissage relevables pour avions gros porteurs.

Dans le cas des avions gros porteurs, c'est-à-dire dont le poids dépasse une centaine de tonnes, et en particulier à voilure haute, il est généralement prévu des trains de fuselage multi-roues afin d'avoir une répartition convenable des charges exercées sur la piste par ces trains d'atterrissage.

Chacun des trains d'atterrissage est alors du type comportant une pluralité de jambes, indépendantes ou non, agencées les unes derrière les autres pour former, en position train bas, une rangée parallèle au plan longitudinal médian de l'avion, et en extrémité de chacune desquelles est montée une paire de roues en diabolo. Ainsi, en position train bas, chaque atterrisseur comporte une rangée de diabolos disposés les uns derrière les autres dans la direction du plan longitudinal médian de l'avion, le nombre des diabolos pouvant aller en général de deux à sept.

On a déjà proposé de réaliser un train d'atterrissage relevable multi-roues à relevage vertical, avec un couplage de tous les diabolos d'une même rangée par une barre commune de commande, comme illustré dans les documents US-A-3 315 919 et GB-A-1 042 190. Chaque jambe est alors réduite à un simple balancier articulé directement sur la structure d'avion, dont le basculement est obtenu par une tringlerie de couplage coulissant horizontalement et reliée à chaque balancier par un amortisseur associé.

Dans le document GB-A-1 042 190, le relevage du train est commandé par un vérin de manoeuvre commun accroché sur la structure d'avion, ce qui est avantageux pour la simplicité, mais le verrouillage en position train bas est assuré par un système interne au vérin (par exemple un verrouillage à griffes ou à segments), de sorte que la descente secours en cas de panne hydraulique peut être rendue difficile, voire impossible.

On retrouve une approche analogue dans le document US-A-4 422 604 de la demanderesse, avec un vérin de manoeuvre commun dont le corps est articulé sur la structure d'avion et dont la tige est articulée sur un levier. Il peut être prévu un moyen de verrouillage en position train bas et train haut constitué par une contre-fiche briseuse équipée de son vérin de désalignement. La structure de ce moyen de verrouillage reste toutefois relativement complexe, et la répartition des charges est difficile à organiser lorsqu'un nombre de jambes important est utilisé (par exemple trois jambes).

On pourra également se référer aux documents EP-A-0 614 804 et EP-A-0 676 328 de la demanderesse, qui décrivent des trains d'atterrissage relevables à plusieurs jambes indépendantes agencées les unes derrière les autres. Chaque jambe du train comporte un «caisson» fixe (c'est-à-dire rigidement solidaire de la structure d'avion) qui est agencé sous la forme d'une pièce de structure.

Pour compléter l'état de la technique, on peut également citer les documents GB-A-1 216 732, GB-A-787 656 et GB-A-794 758 qui concernent des trains d'atterrissage à relevage vertical, dont la jambe est pivotante. La remontée du train s'effectue par action sur l'amortisseur de la jambe via un embiellage, en utilisant alors le pivotement du caisson tubulaire de ladite jambe. Le GB-A-878 385 décrit enfin un train de type tandem, avec un amortisseur qui est commun à deux balanciers.

L'invention a pour but de concevoir un train d'atterrissage relevable, du type à relevage vertical, qui ne présente pas les inconvénients et/ou limitations précitées, et dont la structure confère une grande sécurité, tant au regard des manoeuvres de sortie qu'au regard de la répartition des charges, avec en particulier un verrouillage en position train bas qui est très fiable.

Il s'agit plus particulièrement d'un train d'atterrissage relevable pour avion gros porteur, du type à relevage vertical, comportant une pluralité de jambes agencées les unes derrière les autres pour former, en position train bas, une rangée parallèle au plan longitudinal médian de l'avion, et en extrémité de chacune desquelles est montée une paire de roues, chaque jambe comportant un caisson tubulaire rigidement solidaire d'une structure d'avion, un balancier articulé sur l'extrémité inférieure de ce caisson tubulaire en pouvant pivoter autour d'un axe perpendiculaire au plan longitudinal médian de l'avion, de façon que ledit balancier soit relevable verticalement avec sa paire de roues, et un amortisseur reliant de façon articulée un appendice du balancier à un organe monté pour coulisser axialement à l'intérieur du caisson tubulaire, l'organe coulissant étant relié à un vérin de manoeuvre par une tringlerie associée montée en partie haute dudit caisson tubulaire de façon que ledit organe soit déplaçable axialement par l'actionnement du vérin de manoeuvre entre deux positions extrêmes dont l'une correspond à la position train bas et l'autre à la position train haut.

De préférence, l'organe coulissant de chaque jambe est agencé sous la forme d'un piston équipé de deux points d'accrochage, l'un supérieur pour la tringlerie associée, et l'autre inférieur pour l'amortisseur.

De préférence, la tringlerie associée à l'organe coulissant de chaque jambe comporte une contre-fiche à alignement constituée d'un premier bras articulé sur l'organe coulissant et d'un second bras articulé en partie haute du caisson tubulaire, ladite contre-fiche étant alignée en position train bas. En particulier, il sera avantageux de prévoir que l'amortisseur soit agencé de telle façon qu'en position train bas son axe coïncide sensiblement avec la direction de l'alignement de la contre-fiche. On évite ainsi la génération de moments parasites.

De préférence, le second bras de la contre-fiche de chaque jambe est couplé en rotation à une biellette de même axe horizontal porté par le caisson tubulaire, ladite biellette étant soumise au niveau de son extrémité libre à l'action directe ou indirecte du vérin de manoeuvre.

De préférence encore, les axes des caissons tubulaires sont inclinés selon une même direction.

Dans un mode d'exécution particulier, le vérin de manoeuvre est commun à toutes les jambes, et la tringlerie de chaque jambe est reliée de façon articulée à une barre commune en formant des parallélogrammes articulés.

En variante, on pourra prévoir qu'un vérin de manoeuvre est associé individuellement à l'une au moins des jambes, la tringlerie des autres jambes étant reliée de façon articulée à une barre commune en formant au moins un parallélogramme articulé, ou encore, selon une autre variante, prévoir qu'un vérin de manoeuvre est associé individuellement à chacune des jambes.

Avantageusement encore, le caisson tubulaire de chaque jambe est relié à la structure de l'avion par l'intermédiaire d'éléments de contreventement comportant au moins un panneau et au moins deux bielles.

De préférence alors, les panneaux de contreventement s'étendent dans un plan oblique sensiblement perpendiculaire à l'axe des caissons tubulaires, et certains panneaux relient entre eux deux caissons tubulaires adjacents.

D'autres caractéristiques et avantages de l'invention apparaîtront plus clairement à la lumière de la description qui va suivre et du dessin annexé, concernant un mode de réalisation particulier, en référence aux figures où :
- la figure 1 illustre en vue latérale un train d'atterrissage conforme à l'invention, ici à trois jambes, en position train bas (amortisseurs détendus), la position train haut étant seulement schématisée par des traits mixtes pour les composants principaux ;
- la figure 2 est une vue de dessus du train précité, toujours dans la position train bas ;
- la figure 3 est une vue de détail, prise selon la ligne III-III de la figure 1, permettant de mieux distinguer les éléments de contreventement associés au caisson tubulaire de l'une quelconque des jambes du train d'atterrissage ;
- la figure 4 illustre le même train en position train haut ;
- les figures 5 et 6, qui sont à rapprocher de la figure 1, illustrent deux autres variantes du train d'atterrissage précédent dans lesquelles il est respectivement prévu deux vérins de manoeuvre et une barre de couplage plus courte, ou trois vérins de manoeuvre sans barre de couplage.

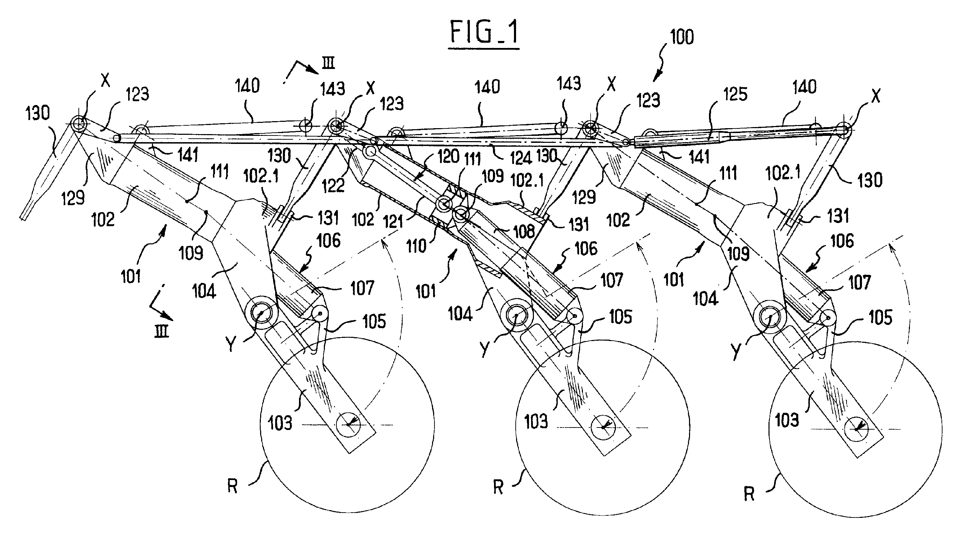

La figure 1 illustre un train d'atterrissage relevable 100 pour avion gros porteur conforme à l'invention. Le train d'atterrissage comporte en l'espèce trois jambes 101 agencées les unes derrière les autres pour former, en position train bas, une rangée parallèle au plan longitudinal médian de l'avion, mais il va de soi que l'invention n'est aucunement limitée au nombre de jambes que comporte le train d'atterrissage.

Chacune de ces jambes 101 est essentiellement identique aux autres, et comporte un caisson tubulaire 102 rigidement solidaire d'une structure d'avion, et un balancier 103 articulé sur l'extrémité inférieure de ce caisson tubulaire en pouvant pivoter autour d'un axe Y perpendiculaire au plan longitudinal médian de l'avion, de façon que ledit balancier soit relevable verticalement avec sa paire de roues R. En l'espèce, le caisson tubulaire 102 présente inférieurement un élargissement 102.1 se terminant par une chape 104 pour le montage articulé du balancier 103.

Chaque jambe 101 est en outre équipée d'un amortisseur 106 reliant de façon articulée un appendice 105 du balancier 103 à un organe 110 monté pour coulisser axialement à l'intérieur du caisson tubulaire 102. Ainsi que cela est mieux visible en figure 1 sur la jambe centrale, qui est illustrée partiellement en coupe, l'amortisseur 106 comporte inférieurement un corps d'amortisseur 107 articulé sur l'appendice 105 du balancier 103, lequel appendice est agencé en un point intermédiaire entre l'axe Y et l'axe des roues en diabolo R associées, et une tige d'amortisseur 108 qui est articulée en un point 109 de l'organe coulissant 110. Chaque organe coulissant 110 est de préférence agencé sous la forme d'un piston coulissant dans le caisson tubulaire associé 102.

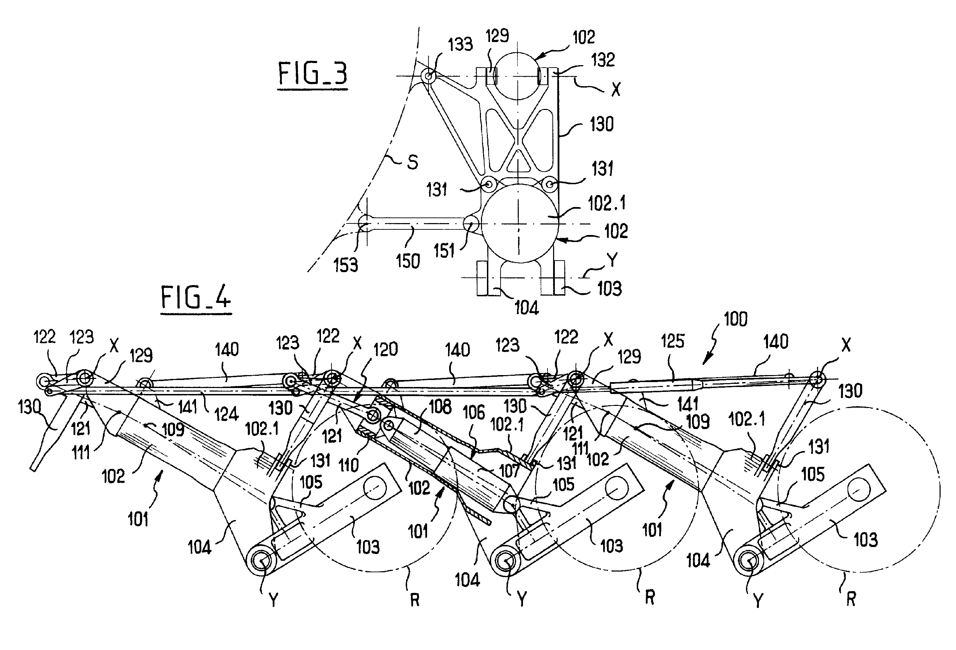

L'organe coulissant 110 est relié à un vérin de manoeuvre 125 par une tringlerie associée montée en partie haute du caisson tubulaire 102 de façon que ledit organe soit déplaçable axialement par l'actionnement du vérin de manoeuvre 125 entre deux positions extrêmes, dont l'une correspond à la position train bas (figure 1) et l'autre à la position train haut (figure 4).

L'organe coulissant 110 de chaque jambe 101, agencé sous la forme d'un piston, est ainsi équipé de deux points d'accrochage 109,111, l'un supérieur 111 pour la tringlerie associée, et l'autre inférieur 109 pour l'amortisseur 106. La tringlerie associée à l'organe coulissant de chaque jambe 101 comporte une contre-fiche à alignement 120, constituée d'un premier bras 121 articulé sur l'organe coulissant 110 et d'un second bras 122 articulé en partie haute du caisson tubulaire 102. Comme cela est visible sur la figure 1, on constate que la contre-fiche 120 est alignée en position train bas, ce qui confère le verrouillage recherché dans cette position. On n'a pas représenté sur la figure la butée et le ressort de maintien qui seront en principe associés à la contre-fiche 120. On constate également sur la figure 1 que l'amortisseur 106 est agencé de telle façon que dans cette position train bas son axe coïncide sensiblement avec la direction de l'alignement de la contre-fiche 120.

Le second bras 122 de la contre-fiche 120 de chaque jambe 101 peut pivoter autour d'un axe X perpendiculaire au plan longitudinal médian de l'avion, au niveau d'un appendice 129 prévu en partie haute du caisson tubulaire associé 102. La liaison au vérin de manoeuvre 125, qui est ici commun à toutes les jambes 101, est assurée par une biellette 123 équipant chaque jambe 101. Ces biellettes sont couplées en rotation au second bras 122 de la contrefiche 120 associée, de façon à pivoter autour du même axe horizontal X porté par le caisson tubulaire 102. Chaque biellette 123 est soumise au niveau de son extrémité libre à l'action, directe ou indirecte, du vérin de manoeuvre 125.

Sur la figure 1, le vérin de manoeuvre 125 est commun à toutes les jambes 101, et la tringlerie 120,123 de chaque jambe 101 est alors reliée de façon articulée à une barre commune 124 en formant des parallélogrammes articulés.

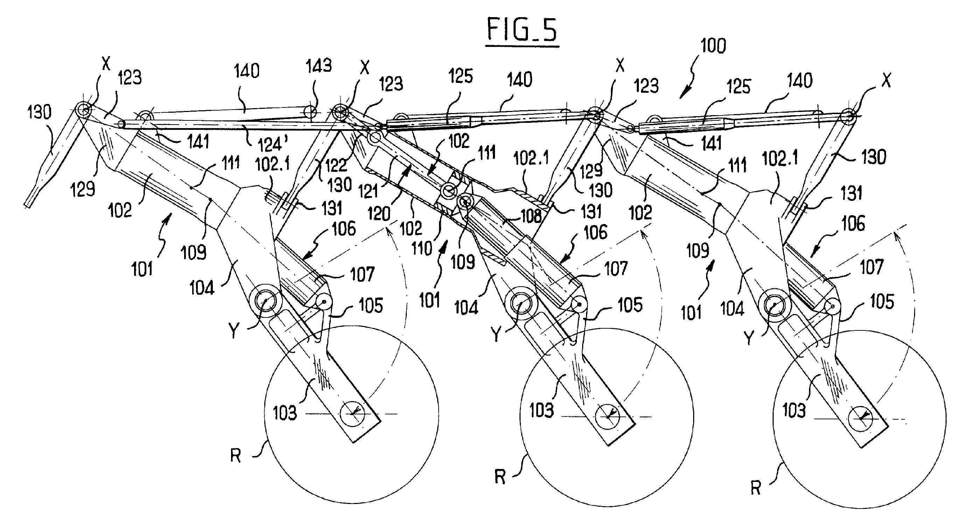

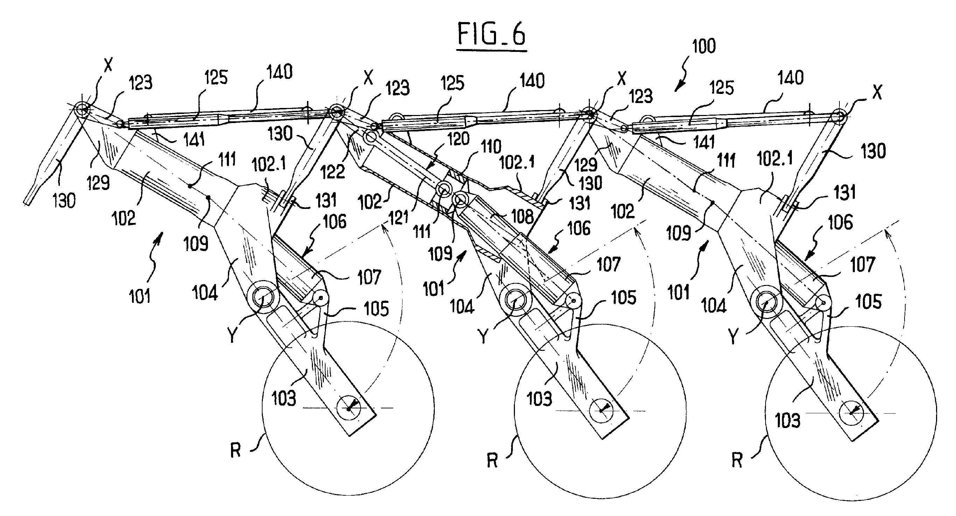

Ceci ne constitue naturellement qu'un mode d'exécution particulier, et l'on pourra prévoir d'autres variantes comportant plusieurs vérins de manoeuvre, comme cela est illustré sur les figures 5 et 6.

Sur les figures 5 et 6, on a représenté un train d'atterrissage dans la même position train bas que sur la figure 1, le train comportant les mêmes composants que le train de la figure 1, mais s'en distinguant par les liaisons associées aux vérins de manoeuvre, lesquels sont alors multiples.

Sur la figure 5, on a voulu illustrer le cas où un vérin de manoeuvre 125 est associé individuellement à l'une au moins des jambes 101, la tringlerie 120,123 des autres jambes 101 étant reliée de façon articulée à une barre commune 124' en formant au moins un parallélogramme articulé. En l'espèce, s'agissant d'un train d'atterrissage à trois jambes, on a prévu deux vérins de manoeuvre 125, et une barre commune 124' formant un seul parallélogramme articulé.

Sur la figure 6, on a illustré le cas d'un train d'atterrissage dans lequel un vérin de manoeuvre 125 est associé individuellement à chacune des jambes 101. Dans ce cas naturellement, aucune barre commune de couplage n'est prévue. La commande de descente ou de relevage des roues de chaque jambe est alors totalement individuelle.

Le choix entre les trois modes d'exécution qui viennent d'être décrits, respectivement à un, deux ou trois vérins de manoeuvre, sera dans la pratique dirigé en fonction de la priorité qui est donnée à la fiabilité ou à la sécurité : l'agencement de la figure 1 privilégie plus la fiabilité que la sécurité, tandis que l'agencement de la figure 6 privilégie plus la sécurité que la fiabilité, l'agencement de la figure 5 constituant un choix intermédiaire. En effet, il est aisé de comprendre qu'en cas de coincement d'un organe coulissant dans le caisson tubulaire associé, le couplage complet tel qu'illustré dans la variante de la figure 1 a pour effet de bloquer également les autres balanciers. Par contre, l'indépendance des mouvements des balanciers pour l'agencement de la figure 6 a pour effet qu'un coincement d'une jambe isolée permet encore l'utilisation des autres jambes indépendantes.

Dans tous les cas, la contre-fiche à alignement 120, qui est alignée en position train bas, procure un verrouillage extrêmement fiable en position train bas.

Dans tous les cas également, le ou les vérins de manoeuvre 125 sont extérieurs et aisément accessibles, ce qui facilite considérablement la maintenance.

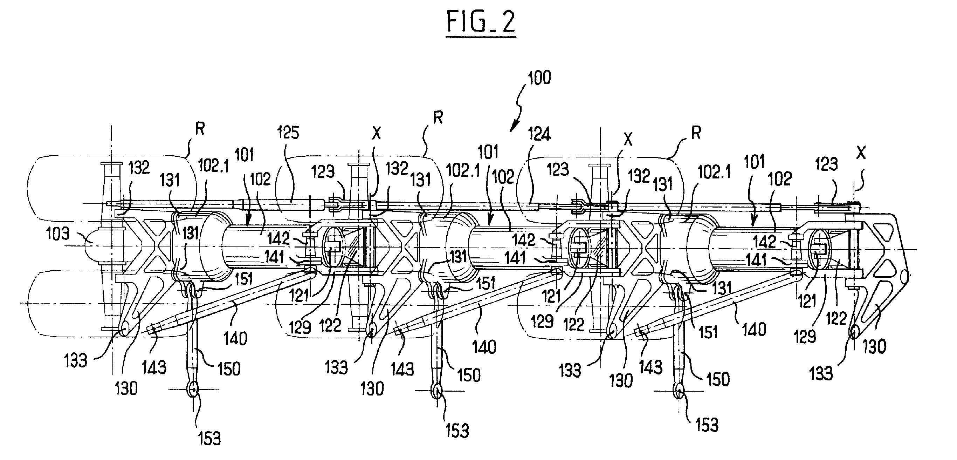

La figure 2, qui illustre le train précédent en position train bas mais en vue de dessus, permet de mieux comprendre l'agencement des différents composants du train d'atterrissage 100.

On distingue en particulier l'agencement du bras supérieur 122 de la contre fiche 120 qui a ici la forme d'un petit panneau. On distingue également l'agencement des différents composants au niveau de chaque axe X.

En effet, chaque caisson tubulaire 102 présente supérieurement une chape 129 à l'intérieur de laquelle est agencé le bras supérieur 122 de la contre-fiche, et à l'extérieur de laquelle vient se disposer une chape d'articulation 132 faisant partie d'un panneau 130 qui vient s'accrocher sur des appendices 131 de la partie s'élargissant 102.1 du caisson tubulaire adjacent 102. La biellette 123 assurant pour chaque jambe 101 la liaison à une barre commune 124 est alors agencée à l'extérieur de l'appendice 132 du panneau 130. Ainsi que cela a été dit plus haut, il est prévu un couplage en rotation entre chaque biellette 123 et le bras supérieur 122 de la contre-fiche de chaque jambe 101. Ce couplage en rotation pourra être réalisé par tout moyen classique, en particulier au moyen d'un système de cannelures axiales au niveau de l'axe X concerné.

On va maintenant s'intéresser aux différents moyens de contreventement associés à chaque caisson tubulaire 102 des jambes 101.

Le caisson tubulaire 102 de chaque jambe 101 est en effet relié indirectement à la structure d'avion par l'intermédiaire de différents éléments de contreventement comportant au moins un panneau 130 et au moins deux bielles 140,150.

Pour une bonne appréhension de l'agencement de ces différents éléments de contreventement, il conviendra de se référer aux figures 1 à 3.

On retrouve le panneau 130, déjà mentionné plus haut, avec son accrochage sur les appendices 131 de la partie s'élargissant 102.1 de chaque caisson tubulaire 102. Sur les figures 2 et 3, on constate que chaque panneau 130 présente un appendice latéral se terminant au niveau d'un point 133 associé à la jonction à la structure de l'avion notée S (représentée schématiquement en trait mixte). En fait, il serait envisageable de remplacer certains au moins des panneaux 130 par des bielles, car l'agencement illustré ici n'induit que peu de torsion pour chaque jambe de train, les efforts minimes de torsion rencontrés étant repris par l'encastrement du caisson tubulaire. En particulier, on a représenté ici, pour la jambe qui est la plus en avant (à gauche sur les figures 1 et 3 et à droite sur la figure 2), un panneau 130 terminal relié à la partie haute du caisson tubulaire : ce panneau 130 pourrait alors fort bien être remplacé par deux bielles de contreventement correctement disposées.

Il est en outre prévu, pour chaque jambe 101, une bielle de structure 140 destinée à la reprise des efforts latéraux, et une bielle de structure 150 destinée à la reprise des efforts longitudinaux. Les bielles de structure 140 qui sont visibles sur les figures 1 et 2, sont reliées à la partie haute du caisson tubulaire associé 102 au niveau d'un appendice 141 dudit caisson par un tourillon 142. L'autre extrémité de la bielle 140 correspond à un point 143 d'accrochage à la structure d'avion. Les bielles de structure 150 sont quant à elles visibles sur les figures 2 et 3, et elles relient un appendice associé 151 de la partie inférieure 102.1 de chaque caisson tubulaire 102 à un point d'accrochage 153 à la structure d'avion. Ainsi, chaque caisson de jambe est ici relié au niveau de trois points 133,143,153 à la structure d'avion.

On constate également que certains panneaux 130 relient entre eux deux caissons tubulaires adjacents 102, ce qui procure encore une rigidité mécanique améliorée. Les panneaux de contreventement 130 s'étendent dans un plan oblique sensiblement perpendiculaire à l'axe des caissons tubulaires 102, et les axes de ces caissons tubulaires 102 sont inclinés selon une même direction.

Un tel agencement confère un excellent comportement aux différentes parties fixes du train d'atterrissage.

On est ainsi parvenu à réaliser un train d'atterrissage relevable dont la structure confère une grande sécurité, tant au regard des manoeuvres de sortie qu'au regard de la répartition des charges, avec en particulier un verrouillage en position train bas qui est très fiable. En outre, on constatera que l'agencement du train d'atterrissage permet de minimiser le nombre d'attaches à la structure d'avion. Ces attaches sont en outre de type ponctuel, près des cadres de la structure, ce qui constitue un avantage supplémentaire. Le relevage du train est enfin particulièrement simple, et le ou les vérins de manoeuvre sont aisément accessibles, ce qui facilite considérablement les opérations de maintenance.

L'invention n'est pas limitée aux modes de réalisation qui viennent d'être décrits, mais englobe au contraire toute variante reprenant, avec des moyens équivalents, les caractéristiques essentielles énoncées plus haut.

## Revendications

1. Train d'atterrissage relevable pour avion gros porteur, du type à relevage vertical, comportant une pluralité de jambes agencées les unes derrière les autres pour former, en position train bas, une rangée parallèle au plan longitudinal médian de l'avion, et en extrémité de chacune desquelles est montée une paire de roues, **caractérisé en ce que** chaque jambe (101) comporte un caisson tubulaire (102) rigidement solidaire d'une structure d'avion, un balancier (103) articulé sur l'extrémité inférieure de ce caisson tubulaire en pouvant pivoter autour d'un axe (Y) perpendiculaire au plan longitudinal médian de l'avion, de façon que ledit balancier soit relevable verticalement avec sa paire de roues (R), et un amortisseur (106) reliant de façon articulée un appendice (105) du balancier (103) à un organe (110) monté pour coulisser axialement à l'intérieur du caisson tubulaire (102), l'organe coulissant (110) étant relié à un vérin de manoeuvre (125) par une tringlerie associée (120,123) montée en partie haute dudit caisson tubulaire de façon que ledit organe soit déplaçable axialement par l'actionnement du vérin de manoeuvre (125) entre deux positions extrêmes dont l'une correspond à la position train bas et l'autre à la position train haut.

2. Train d'atterrissage selon la revendication 1, **caractérisé en ce que** l'organe coulissant (110) de chaque jambe (101) est agencé sous la forme d'un piston équipé de deux points d'accrochage (109 ; 111), l'un supérieur (111) pour la tringlerie associée (120, 123), et l'autre inférieur (109) pour l'amortisseur (106).

3. Train d'atterrissage selon la revendication 1 ou la revendication 2, **caractérisé en ce que** la tringlerie (120,123) associée à l'organe coulissant (110) de chaque jambe (101) comporte une contre-fiche à alignement (120) constituée d'un premier bras (121) articulé sur l'organe coulissant (110) et d'un second bras (122) articulé en partie haute du caisson tubulaire (102), ladite contre-fiche étant alignée en position train bas.

4. Train d'atterrissage selon la revendication 3, **caractérisé en ce que** l'amortisseur (106) est agencé de telle façon qu'en position train bas son axe coïncide sensiblement avec la direction de l'alignement de la contre-fiche (120).

5. Train d'atterrissage selon la revendication 3, **caractérisé en ce que** le second bras (122) de la contre-fiche (120) de chaque jambe (101) est couplée en rotation à une biellette (123) de même axe horizontal (X) porté par le caisson tubulaire (102), ladite biellette étant soumise au niveau de son extrémité libre à l'action directe ou indirecte du vérin de manoeuvre (125).

6. Train d'atterrissage selon l'une des revendications 1 à 5, **caractérisé en ce que** les axes des caissons tubulaires (102) sont inclinés selon une même direction.

7. Train d'atterrissage selon l'une des revendications 1 à 6, **caractérisé en ce que** le vérin de manoeuvre (125) est commun à toutes les jambes (101), et la tringlerie (120,123) de chaque jambe (101) est reliée de façon articulée à une barre commune (124) en formant des parallélogrammes articulés.

8. Train d'atterrissage selon l'une des revendications 1 à 6, **caractérisé en ce qu'**un vérin de manoeuvre (125) est associé individuellement à l'une au moins des jambes (101), et la tringlerie (120,123) des autres jambes (101) est reliée de façon articulée à une barre commune (124') en formant au moins un parallélogramme articulé.

9. Train d'atterrissage selon l'une des revendications 1 à 6, **caractérisé en ce qu'**un vérin de manoeuvre (125) est associé individuellement à chacune des jambes (101).

10. Train d'atterrissage selon l'une des revendications 1 à 9, **caractérisé en ce que** le caisson tubulaire (102) de chaque jambe est relié à la structure d'avion par l'intermédiaire d'éléments de contreventement comportant au moins un panneau (130) et au moins deux bielles (140,150).

11. Train d'atterrissage selon la revendication 10, **caractérisé en ce que** les panneaux de contreventement (130) s'étendent dans un plan oblique sensiblement perpendiculaire à l'axe des caissons tubulaires (102).

12. Train d'atterrissage selon la revendication 10 ou la revendication 11, **caractérisé en ce que** certains panneaux (130) relient entre eux deux caissons tubulaires adjacents (102).
